(19) **Europäisches Patentamt**
**European Patent Office**
**Office européen des brevets**

(11) Veröffentlichungsnummer : **0 315 805 B1**

(12) # EUROPÄISCHE PATENTSCHRIFT

(45) Veröffentlichungstag der Patentschrift :
**05.06.91 Patentblatt 91/23**

(51) Int. Cl.⁵ : **F16F 1/46**, B60K 5/12,
B29C 67/14

(21) Anmeldenummer : **88117386.8**

(22) Anmeldetag : **19.10.88**

(54) **Lager für Motor, Getriebe oder ähnliche Teile eines Kraftfahrzeuges.**

(30) Priorität : **09.11.87 DE 3737988**

(43) Veröffentlichungstag der Anmeldung :
**17.05.89 Patentblatt 89/20**

(45) Bekanntmachung des Hinweises auf die
Patenterteilung :
**05.06.91 Patentblatt 91/23**

(84) Benannte Vertragsstaaten :
**ES FR GB IT**

(56) Entgegenhaltungen :
**EP-A- 0 015 298**
**EP-A- 0 073 299**
**DE-A- 2 658 358**
**DE-A- 3 104 709**
**DE-U- 1 906 804**
**DE-U- 8 714 888**
**US-A- 4 078 443**
**US-A- 4 415 391**

(73) Patentinhaber : **WEGU Gummi- und
Kunststoffwerke Walter Dräbing KG
Mündener Strasse 31
W-3500 Kassel (DE)**

(72) Erfinder : **Dräbing, Walter
Am Schnepfenbusch 10
W-3501 Niestetal (DE)**
Erfinder : **Fiedler, Kurt
Raiffeisenstrasse 1
Zierenberg (DE)**

(74) Vertreter : **Rehberg, Elmar, Dipl.-Ing.
Postfach 3162 Am Kirschberge 22
W-3400 Göttingen (DE)**

**Beschreibung**

Die Erfindung bezieht sich auf ein Lager für Motor, Getriebe oder ähnliche Teile eines Kraftfahrzeugs, mit einem auf Zug beanspruchbaren Lagerkörper aus Elastomerwerkstoff, in dem eine in sich geschlossene, in der Ebene des Lagerkörpers elastisch verformbare Einlage vorgesehen ist, die eine zunächst gespreizte, ungestreckte Ausgangsform besitzt, so daß bis zum Erreichen einer gestreckten Lage der Lagerkörper allein auf Zug beansprucht ist, und bei Überschreiten der gestreckten Lage der Lagerkörper und die Einlage auf Zug beansprucht sind. Das Lager dient zur Auflagerung beispielsweise eines Motors einer Brennkraftmaschine eines Kraftfahrzeugs, also zur Aufnahme vergleichsweise schwerer Teile, die gegenüber dem Fahrzeugraum bzw. der Karosserie abgestützt werden müssen. Dabei geht es einerseits um Isolierung der Übertragung von Körperschall und anderen Schwingungen. Andererseits muß eine Relativbeweglichkeit in gewissen Grenzen zwischen Motor und Karosserie möglich sein.

Ein Lager der eingangs beschriebenen Art ist aus dem DE-U-19 06 804 bekannt. Der Lagerkörper ist als geschlossener Block ausgebildet und besitzt zwei Löcher, die zweckmäßig mit Metall, Kunststoff o.dgl. ausgekleidet sind. Um diese ausgekleideten Befestigungslöcher herum ist eine verstärkende Einlage aus einem endlosen Fadenwickel angeordnet. Diese Einlage umschließt in entspanntem Zustand des Lagers die Befestigungslöcher lose. Das Lager kann auch dreieckige Form aufweisen und mit drei Befestigungslöchern versehen sein. Der Lagerkörper kann auch aus mehreren Kautschukmischungen gefertigt sein, wobei dann die Einlage des Fadenwickels in dem Werkstoff festhaftend einvulkanisiert ist. Die Anzahl der einzelnen Fäden des endlosen Fadenwickels werden entsprechend der gewünschten Belastung des Lagers gewählt. Über die Herstellung und die Anordnung der Einlage in der zunächst gespreizten, ungestreckten Ausgangsform werden keine Angaben gemacht. Auch das Material und die Eigenschaften der Einlage sind nicht näher spezifiziert, so daß davon auszugehen ist, daß die Beweglichkeit des Lagers mit dem Erreichen der Strecklage der Einlage beendet ist.

Auch aus der DE-A-31 04 709 ist eine ringförmige Elastomerschlaufe für eine Aufhängung bekannt, bei dem in einem Lagerkörper aus elastischem Material eine Zugfeder aus Federbandstahl untergebracht ist, die glatte, also nichtfedernde Abschnitte sowie gewellte Abschnitte aufweist. Diese Zugfeder bildet eine Einlage, die infolge ihrer Formgebung derart federn kann, bis die gestreckte Lage erreicht wird. In der gestreckten Lage bildet diese Einlage jedoch einen Anschlag bzw. eine Begrenzung für jedliche weitere Ausfederung.

Der Erfindung liegt die Aufgabe zugrunde, ein Lager der eingangs beschriebenen Art derart weiterzubilden, daß bei guter Isolierwirkung gegen Körperschallübertragung größere Ausfederungen bei steilerer Progressivität möglich sind und verläßlich eingehalten werden können.

Erfindungsgemäß wird dies dadurch erreicht, daß die Einlage aus derart dehnfähigem, federnd-nachgiebigem Material besteht, daß sie nach dem Erreichen ihrer gestreckten Lage eine weitere Ausfederung des Lagerkörpers mit nennenswertem Federweg gestattet, und daß der Lagerkörper als gespritzter Formkörper ausgebildet und mindestens ein eingelegtes und umspritztes Rohelastomerstück zum Aufspannen der gespreizten, ungestreckten Ausgangsform der Einlage aufweist. Die Einlage besteht nunmehr aus dehnfähigem, federnd-nachgiebigem Material, so daß sie bei Erreichen ihrer gestreckten Lage nicht einen Anschlag darstellt, sondern eine weitere Ausfederung mit nennenswertem Federweg gestattet. Dies ergibt vorteilhaft eine relativ weiche Lagerung bei kleinen Ausfederungen und eine relativ harte Federung bei großen Ausfederungen. Durch die Anordnung des Rohelastomerstücks ist verläßlich die Möglichkeit gegeben, die Einlage in der Spritzform für den Lagerkörper in der vorgesehenen gespreizten, ungestreckten Ausgangsform zu fixieren, so daß die Einlage so in den Elastomerwerkstoff des Lagerkörpers eingeformt wird. Die Ausgangslage ist damit reproduzierbar festgelegt.

Der Lagerkörper kann mittig eine Aussparung aufweisen. In ihm können mindestens drei Buchsen eingebettet sein, wobei die Einlage in ihrer gespreizten, ungestreckten Ausgangsform unmittelbar an den Buchsen und an dem Rohelastomerstück abgestützt ist. Damit können auch die Buchsen zur Sicherung der gespreizten, ungestreckten Ausgangsform der Einlage herangezogen werden. Es ist auch möglich, mehr als drei Buchsen anzuordnen, die jeweils Auflager- bzw. Aufhängepunkte bilden. Die Einlage ist in gespreizter, ungestreckter Ausgangsform um diese Buchsen herumgeführt, wobei die Kräfte, die von der Einlage übernommen werden, unmittelbar auf die Buchsen übertragen werden und nicht erst durch den Elastomerwerkstoff des Lagerkörpers geleitet werden müssen. Bei kleinen Ausfederungen ist die Einlage spannungsfrei und die gesamte Beanspruchung wird von dem Elastomerwerkstoff des Lagerkörpers übernommen.

Der Lagerkörper weist im Bereich jeder Buchse einen Aufhängepunkt auf und die Einlage kann in der gespreizten Ausgangsstellung etwa herzförmige Gestalt aufweisen. Dies stellt die ungestreckte Lage dar. In der gestreckten Lage bietet die Einlage die Form eines Dreiecks mit um die Buchsen abgerundeten Kanten.

Die federnd-nachgiebige Einlage aus einer insbesondere mehrlagigen Fadenschlinge eines Fadens kann aus natürlichen Stoffen wie Baumwolle, Seide o.dgl. und/oder aus Kunststoff bestehen. Solche elastisch nachgiebigen Fäden sind aus anderen Gebieten der Technik bekannt.

Der Lagerkörper und die Einlagen weisen maximal zulässige Federwege in ähnlicher Größenordnung auf, d.h. auch die Einlage besitzt einen nennenswerten Federweg, in welchem sie sich elastisch längt. Die Einlage weist darüberhinaus auch ein entsprechendes Rückstellvermögen auf.

Ein Verfahren zur Herstellung eines einen Lagerkörper aufweisenden Lagers arbeitet mit einer Spritzform und kennzeichnet sich erfindungsgemäß dadurch, daß in die Spritzform mindestens ein Rohelastomerstück lagestabil eingebracht wird, daß die Einlage über das Rohelastomerstück gelegt und dabei aufgespreizt wird, und daß die eingelegten Teile mit Elastomerwerkstoff umspritzt werden. Es können natürlich auch mehrere Rohelastomerstücke in die Spritzform eingelegt werden. Sofern als Elastomerwerkstoff Gummi benutzt wird, schließt sich eine Vulkanisation in bekannter Weise an. Bei der Herstellung des Lagerkörpers können auch Seitendeckteile in die Spritzform eingelegt werden, um die mittige, symmetrische Plazierung der Einlage sicherzustellen. In der Spritzform können mindestens zusätzlich drei Buchsen eingebracht und die Einlage über das Rohelastomerstück und die Buchsen aufgespreizt werden.

Die Erfindung wird anhand eines bevorzugten Ausführungsbeispiels weiter verdeutlicht und beschrieben. Es zeigen :

Figur 1 eine Stirnansicht wesentlicher Teile des Lagers,

Figur 2 eine Seitenansicht des Lagers, teilweise geschnitten und

Figur 3 ein Kennliniendiagramm.

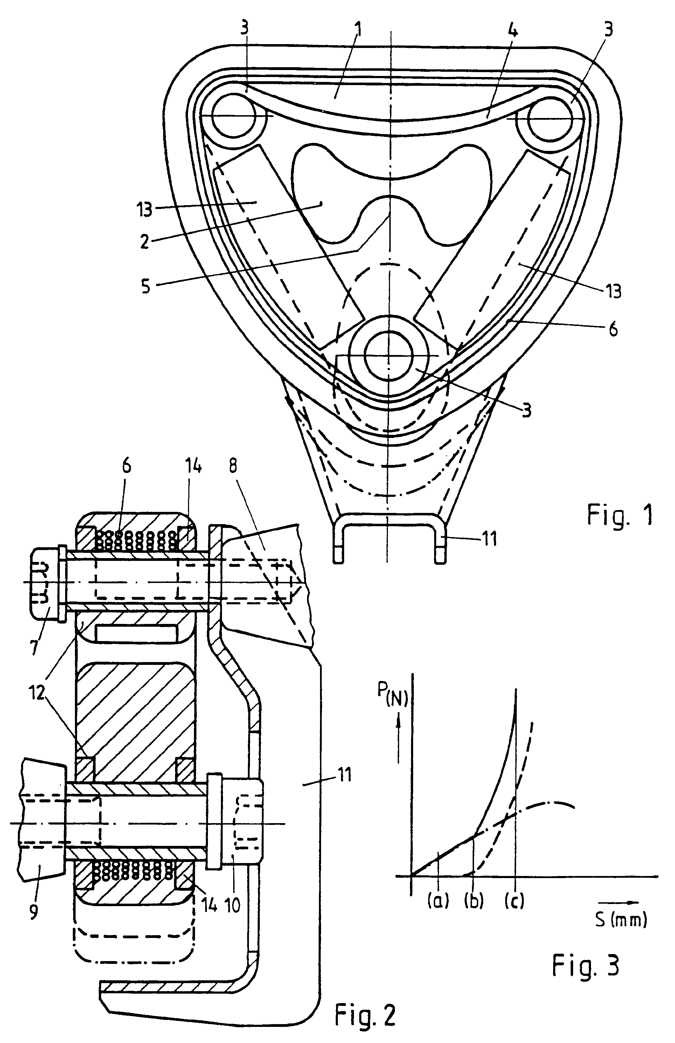

Wesentlicher Bestandteil des Lagers ist ein Lagerkörper 1 aus Elastomerwerkstoff, also insbesondere Gummi, Kunststoff u.dgl. Der Lagerkörper 1 weist etwa ringförmige Gestalt auf und kann, wie dargestellt, gedrungen dreieckig ausgebildet sein. Mittig weist er eine Durchbrechung 2 auf. In das Material des Lagerkörpers sind drei Buchsen 3 eingebettet, wobei die beiden oberen Buchsen durch einen metallenen Stützbügel 4 miteinander verbunden bzw. gegeneinander abgestützt sein können. Dieser metallene Stützbügel 4 verstärkt u.a. den Lagerkörper 1, der im Bereich im Anschluß an die Durchbrechung 2 einen Noppen 5 aufweist, so daß auf diese Art und Weise eine Begrenzung gegen Einfederbewegungen gebildet ist. Die Buchsen 3 sind unmittelbar von einer Einlage 6 umgeben, die als Schlingenpaket ausgebildet sein kann und sich unmittelbar an den Buchsen 3 abstützt. In der dargestellten unbelasteten Form oder auch in der statischen Belastungslage, wie in durchgezogener Linienführung dargestellt, weist die Einlage 6 eine gespreizte, ungestreckte Ausgangsform auf, so daß bei kleinen Ausfederbewegungen zunächst das Elastomermaterial des Lagerkörpers 1 allein die Zugkräfte aufnehmen kann. Wie insbesondere aus Figur 2 ersichtlich ist, sind die beiden oberen Buchsen 3 mittels Schrauben 7 mit einem Fahrzeugrahmen 8 bzw. der selbsttragenden Karosserie verbunden, während die untere Buchse 3 von einer an einem Motor, Getriebe o.dgl. 9 angreifenden Schraube 10 durchsetzt ist. Das aufzuhängende Teil ist hier also tatsächlich hängend gelagert, so daß der Lagerkörper 1 auf Zug beansprucht wird. Ein Fangstück 11 als mechanische Sicherheitseinrichtung kann vorgesehen sein, um den Motor 9 dann aufzunehmen und für einen Notbetrieb abzustützen, wenn der Lagerkörper 1 beschädigt oder in anderer Weise zerstört ist.

Wichtig ist zu erkennen, daß die Einlage 6 zunächst eine gespreizte, ungestreckte Ausgangsform besitzt und erst am Übergang zwischen kleinen und großen Ausfederbewegungen in die gestreckte Lage überführt wird, aus der heraus sie dann noch eine elastische Dehnung mit einem nennenswerten Federweg ausführen kann. Dies wird auch durch Figur 3 verdeutlicht. Die Position a zeigt die in den Figuren 1 und 2 in durchgezogener Linienführung dargestellte statische Ausgangslage. Es schließt sich ein Bereich kleiner Ausfederbewegungen an, der etwa in der Position b endet, in der die Einlage 6 ihre gestreckte Lage einnimmt. Zwischen den Positionen a und b wird allein der Elastomerwerkstoff des Lagerkörpers 1 auf Zug beansprucht, während anschließend im Bereich größerer Ausfederbewegungen auch zusätzlich die Einlage 6 auf Zug beansprucht wird. In gestrichelter Linienführung ist in den Figuren 1 und 2 die Absenkung des unteren Bereichs des Lagerkörpers 1 gemäß der Position b angedeutet. In strichpunktierter Linienführung wird die Position c verdeutlicht. Es ist erkennbar, daß die Kennlinie gemäß Figur 3 zwischen den Positionen b und c eine beachtliche Progressivität aufweist. Die in Figur 3 strichpunktierte Linie ist die Kennlinie des Lagerkörpers 1 aus Elastomerwerkstoff allein. Die gestrichelte Linie stellt die Kennlinie der Einlage 6 dar und die durchgezogene Linienführung zeigt die Summe dieser beiden Kennlinien, also die Kennlinie des Lagerkörpers 1. Aus Figur 3 ist auch ersichtlich, daß in dem Bereich, in welchem sich die Einlage 6 elastisch längt und verkürzt, beachtliche Federwege zurückgelegt werden, die etwa in der Größenordnung sind wie die zuvor im Bereich kleiner Ausfederbewegungen zwischen den Positionen a und b zurückgelegten Federwege.

Der Lagerkörper 1 wird zweckmäßig mit Hilfe einer Spritzform hergestellt. In diese Spritzform werden zunächst ein Seitendeckteil 12 eingelegt. Anschließend werden die Buchsen 3 und der Stützbügel 4 lagestabil positioniert. Sodann wird die Einlage 6 um die Buchsen 3 herumgelegt und durch die zusätzliche Einlage von Rohelastomerkörpern 13 in die gespreizte, ungestreckte Ausgangsstellung ähnlich Figur 1 zurückgeführt. Dabei wird die Einlage 6 auch mittig (Figur 2) gehalten. Schließlich wird noch ein weiteres Seitendeckteil 14 aufgelegt und es erfolgt das Umspritzen dieser eingelegten Teile mit Elastomerwerkstoff in der Spritzform.

**Bezugszeichenliste :**

1 = Lagerkörper
2 = Durchbrechung
3 = Buchse
4 = Stützbügel
5 = Noppen
6 = Einlage
7 = Schraube
8 = Fahrzeugrahmen
9 = Motor
10 = Schraube
11 = Fangstück
12 = Seitendeckteil
13 = Rohelastomerkörper
14 = Seitendeckteil

**Ansprüche**

1. Lager für Motor, Getriebe oder ähnliche Teile eines Kraftfahrzeugs, mit einem auf Zug beanspruchbaren Lagerkörper (1) aus Elastomerwerkstoff, der mindestens zwei Löcher mit parallelen Achsen aufweist und in dem eine in sich geschlossene, in einer Ebene des Lagerkörpers senkrecht zu den Achsen der Löchern elastisch verformbare Einlage (6) vorgesehen ist, die eine zunächst gespreizte, ungestreckte Ausgangsform besitzt, so daß bis zum Erreichen einer gestreckten Lage der Lagerkörper allein auf Zug beansprucht ist und bei Überschreiten der gestreckten Lage der Lagerkörper und die Einlage auf Zug beansprucht sind, dadurch gekennzeichnet, daß die Einlage (6) aus derart dehnfähigem, federnd-nachgiebigem Material besteht, daß sie nach dem Erreichen ihrer gestreckten Lage eine weitere Ausfederung des Lagerkörpers mit nennenswertem Federweg gestattet, und daß der Lagerkörper (1) als gespreizter Formkörper ausgebildet ist und mindestens ein eingelegtes und umspritztes Rohelastomerstück (13) zum Aufspannen der gespreizten, ungestreckten Ausgangsform der Einlage (6) aufweist.

2. Lager nach Anspruch 1, dadurch gekennzeichnet, daß der Lagerkörper (1) mittig eine Aussparung (2) aufweist und in ihm mindestens drei Buchsen (3) eingebettet sind, und daß die Einlage (6) in ihrer gespreizten, ungestreckten Ausgangsform unmittelbar an den Buchsen (3) und dem Rohelastomerstück (13) abgestützt ist.

3. Lager nach Anspruch 1 und 2, dadurch gekennzeichnet, daß der Lagerkörper (1) im Bereich jeder Buchse (3) einen Aufhängepunkt aufweist und die Einlage (6) in der gespreizten Ausgangsstellung etwa herzförmige Gestalt aufweist.

4. Lager nach Anspruch 1 bis 3, dadurch gekennzeichnet, daß die federnd nachgiebige Einlage (6) aus einer insbesondere mehrlagigen Fadenschlinge eines Fadens aus natürlichen Stoffen wie Baumwolle, Seide o.dgl. und/oder aus Kunststoff besteht.

5. Lager nach Anspruch 1 bis 4, dadurch gekennzeichnet, daß der Lagerkörper (1) und die Einlage (6) maximal zulässige Federwege in ähnlicher Größenordnung aufweist.

6. Verfahren zur Herstellung eines einen Lagerkörper aufweisenden Lagers nach Anspruch 1 bis 5, mit einer Spritzform, dadurch gekennzeichnet, daß in die Spritzform mindestens ein Rohelastomerstück lagestabil eingebracht wird, daß die Einlage über das Rohelastomerstück gelegt und dabei aufgespreizt wird, und daß die eingelegten Teile mit Elastomerwerkstoff umspritzt werden.

7. Verfahren nach Anspruch 6, dadurch gekennzeichnet, daß in die Spritzform zusätzlich mindestens drei Buchsen eingebracht und die Einlage über das Rohelastomerstück und die Buchsen aufgespreizt wird.

**Claims**

1. Mount for an engine, gearbox or similar parts of a motor vehicle, having a mount body (1) of elastomer material, which can be subjected to tensile stress, has at least two holes with parallel axes and in which there is provided a continuously extending insert (6), which can be deformed elastically in a plane of the mount body perpendicular to the axes of the holes and has an initially spread, unstretched starting shape, so that, until a stretched position is reached, the mount body alone is subjected to tensile stress and, when the stretched position is exceeded, the mount body and the insert are subjected to tensile stress, characterised in that the insert (6) consists of such extensible, resilient-compliant material that, after reaching its stretched position, it allows a further spring-extension of the mount body with appreciable spring excursion, and in that the mount body (1) is designed as a spread (sic) moulding and has at least one inserted and moulded-around raw elastomer piece (13) for setting out the spread, unstretched starting shape of the insert (6).

2. Mount according to Claim 1, characterised in that the mount body (1) has a clearance (2) in the centre and at least three bushes (3) are embedded in the said body, and in that the insert (6) is supported in its spread, unstretched starting shape directly against the bushes (3) and the raw elastomer piece (13).

3. Mount according to Claims 1 and 2, characterised in that the mount body (1) has a suspension point in the region of each bush (3) and the insert (6) has an approximately heart-shaped form in the spread starting position.

4. Mount according to Claims 1 to 3, characterised in that the resiliently compliant insert (6) consists of an in particular multi-layered loop of filamentary material of natural substances, such as cotton, silk or the like and/or of a synthetic substance.

5. Mount according to Claims 1 to 4, characterised in that the mount body (1) and the insert (6) have maximum permissible spring excursions of a similar order of magnitude.

6. Process for producing a mount having a mount body according to Claims 1 to 5, with an injection mould, characterised in that at least one raw elastomer piece is introduced into the injection mould so as to be stable in its position, in that the insert is laid over the raw elastomer piece and thereby spread out, and in that elastomer material is injection-moulded around the inserted parts.

7. Process according to Claim 6, characterised in that at least three bushes in addition are introduced into the injection mould and the insert is spread out over the raw elastomer piece and the bushes.


## Revendications

1. Support pour moteur, transmission ou éléments similaires d'un véhicule automobile, avec un corps de support (1) en matériau élastomère pouvant être sollicité en traction, qui présente au moins deux trous ayant des axes parallèles et dans lequel est prévu un élément inséré (6) fermé sur lui-même, déformable élastiquement, disposé dans un plan du corps de support perpendiculaire aux axes des trous,cet élément ayant une forme initiale tout d'abord écartée et non tendue, de telle sorte que, jusqu'à ce qu'il atteigne un état tendu, le corps de support est seul sollicité en tension et, quand est dépassé l'état tendu, le corps de support et l'élément inséré sont tous deux sollicités en tension,

**caractérisé** en ce que l'élément inséré (6) est constitué d'un matériau extensible déformable élastiquement, de manière à permettre, une fois atteint son état tendu,une déformation élastique supplémentaire du corps de support avec une course élastique appréciable, et en ce que le corps de support (1) est sous la forme d'un corps moulé par injection et présente au moins une pièce insérée (13) en élastomère brut revêtue par surmoulage par injection, pour fixer la forme initiale écartée, non tendue, de l'élément inséré (6).

2. Support selon la revendication 1, caractérisé en ce que le corps de support (1) présente en son centre un évidement (2) et qu'au moins trois douilles (3) sont noyées dans ce corps, et en ce que l'élément inséré (6) dans sa forme initiale écartée non tendue s'appuie directement sur les douilles (3) et sur la pièce (13) en élastomère brut.

3. Support selon les revendications 1 et 2, caractérisé en ce que le corps de support (1) présente dans la région de chaque douille (3) un point de suspension et en ce que l'élément inséré (6) présente, dans sa position initiale écartée, une forme sensiblement analogue à un coeur.

4. Support selon les revendications 1 à 3, caractérisé en ce que l'élément inséré (6) déformable plastiquement est constitué d'un enroulement, en particulier d'un enroulement multicouche d'un filament en matière naturelle telle que coton, soie ou autre matière similaire, ou bien en matière plastique.

5. Support selon les revendications 1 à 4, caractérisé en ce que le corps de support (1) et l'élément inséré (6) présentent des courses maximales de déformation élastique admissible qui sont sensiblement du même ordre de grandeur.

6. Procédé de fabrication d'un support présentant un corps de support selon les revendications 1 à 5, au moyen d'un moule de moulage par injection, caractérisé en ce qu'au moins une pièce en élastomère brut est introduite en position stable dans le moule de moulage par injection, en ce que l'élément inséré est posé au dessus de la pièce en élastomère brut, en étant par conséquent écarté, et en ce que les pièces insérées sont revêtues de matériau élastomère par surmoulage par injection.

7. Procédé selon la revendication 6, caractérisé en ce qu'au moins trois douilles sont introduites en supplément dans le moule de moulage par injection et en ce que l'élément inséré est écarté sur la pièce en élastomère brut et sur les douilles.

Fig. 1

Fig. 2

Fig. 3